# EUROPÄISCHE PATENTSCHRIFT

(11) **EP 0 976 186 B1**
(45) Veröffentlichungstag und Bekanntmachung des Hinweises auf die Patenterteilung: **18.09.2002**
(21) Anmeldenummer: 98909705.0
(22) Anmeldetag: 07.04.1998
(51) Int. Cl.: H02G 1/12

(54) **ABISOLIERVORRICHTUNG**
INSULATION STRIPPING DEVICE
DISPOSITIF POUR DENUDER UN CABLE

(30) Priorität: 14.04.1997 CH 86397
(43) Veröffentlichungstag der Anmeldung: 02.02.2000
(73) Patentinhaber: Schleuniger Holding AG, 3608 Thun (CH)
(72) Erfinder: MESSER, Jürg, Oberdorf SO (CH); LOCHER, Beat, CH-3608 Thun (CH); STREHL, Martin, CH-3608 Thun (CH)
(74) Vertreter: Rosenich, Paul
(86) Internationale Anmeldenummer: IB9800505
(87) Internationale Veröffentlichungsnummer: WO98047209

(56) Entgegenhaltungen:
- EP-A- 0 673 099
- WO-A-98/08283
- US-A- 4 584 912
- US-A- 5 522 130

## Beschreibung

Die Erfindung betrifft ein Verfahren und eine Vorrichtung zum Abisolieren von Kabel- bzw. Drahtendstücken, insbesondere elektrischer oder fiberoptischer Kabeln mit koaxialem Aufbau. Solche Verfahren und Vorrichtungen sind seit längerem bekannt. Die EP-B-195932 beschreibt einen weltweit häufig angewendeten Typ einer Abisoliervorrichtung. Dieser Aufbau umfasst - im Gegensatz zu Abisoliervorrichtungen für das Abisolieren von Endloskabeln - im wesentlichen Spannbacken, Zentrierbacken, Messerbacken und einen Anschlag für das händisch herangeführte Kabelendstück, das - insbesondere mehrstufig - eingeschnitten und abisoliert werden soll. Der Anschlag übernimmt dabei die Funktion einer Längeneinstellung für das Kabelendstuck und die Funktion des Erkennens, dass die voreingestellte Länge mit dem Kabelendstück durchfahren wurde und dieses mit seinem Ende somit am Anschlag in einer bestimmten Entfernung von den Spannbacken anliegt. Der Anschlag ist demzufolge mit einem Anschlagsensor verbunden.

In einer Weiterentwicklung dieses Aufbaus wurde auf den Anschlagsensor verzichtet und statt dessen ein Verfahrensschritt angeboten, bei dem die Messer bzw. Zentrierbacken vor dem Einschieben des Kabelendstückes in einer vorbestimmten Axialposition geschlossen wurden und das Kabelendstück somit an die geschlossenen Messer- bzw. Zentrierbacken angeschlagen werden konnte. Da die Messer- bzw. Zentrierbacken vergleichbar dem Anschlag gemäss der EP-B zuvor an die entsprechende Längsposition gefahren wurden, übernahmen die Messer und Zentrierbacken somit vollinhaltlich die Längeneinstellfunktion für das Kabelendstück. Bei diesen beiden bekannten Verfahren und Vorrichtungen wurde somit keine Längenmessung, sondern eine aktive Längenvoreinstellung mit Hilfe eines Anschlages oder mit Hilfe der als Anschlag wirkenden Zentrier- und oder Messerbacken durchgeführt.

Einen anderen Aufbau für eine Endloskabelverarbeitung offenbart die US-A-5522130. Eine Kombination aus Lichtschranken und gesteuerte Antriebs(-mess)rädern erlaubt eine Längenpositionierung des Kabels in bezug auf stationäre Messer.

Ein anderes Verfahren zur Bestimmung der Länge von Kabelendstücken bzw. eine andere Vorrichtung ist in der EP-A-673099 beschrieben. Bei diesem Aufbau wird das zu bearbeitende Kabelendstuck in die Abisoliervorrichtung eingeführt und dort in seiner aktuellen Axiallage, die nicht genau vorherbestimmt ist, festgehalten. Anschliessend wird mittels einer - in Längsrichtung dieses Kabelendstückes relativ zu diesem - gegen das freie Ende desselben verschiebbaren Abtastanordnung, die durch die geschlossenen an der Kabeloberfläche gleitenden Zentrierbacken gebildet ist, die tatsächliche Länge abgetastet und somit die Länge des eingespannten Kabelendstuckes·gemessen.

Wahrend bei dem ersten Verfahren somit eine Längeneinstellung. jedoch keine echte Längenmessung vorgenommen wird, wird bei diesem zweiten Verfahren an dem willkürlich eingeschobenen und in Axialposition fixierten Kabelendstück eine Langenmessung durchgeführt.

Beide bekannten Verfahren weisen verbesserungsbedürftige Eigenschaften auf. Das erstbeschriebene Verfahren ist nur schlecht anwendbar bei relativ weichen Kabelendstücken. Das zweitbeschriebene Verfahren versucht zwar diesen Nachteil zu beseitigen, ist aber gerade bei weichen und dünnen Kabeln nur schlecht, anwendbar. Insbesondere können weiche Isolierungen auf Kabeln axial relativ zum Leiter verschoben werden, so dass die Messung fehlerbehafter sein kann.

Ausserdem verzögert der beim zweiten Verfahren zusätzliche Verfahrensschritt der Längenmessung den Abisoliervorgang im Vergleich zum erstbeschriebenen Verfahren.

Eine Weiterentwicklung des zweiten Verfahrens durch die Anmelderin (CH-2053/96, noch nicht veröffentlicht, u.WO-98/08283) verbesserte zwar das Messproblem bei weichen Kabeln mit weichen Kabelmänteln, führte jedoch nicht zu einem beschleunigten Abisolieren, verglichen mit dem ersten Verfahren.

Der Erfindung liegt somit die Aufgabe zugrunde, ein neues Verfahren und eine verbesserte Vorrichtung zu schaffen, bei der ohne zusätzlichen Zeitverlust auch dünne und relativ weiche Kabelendstücke längenmässig bestimmbar sind.

Gelöst wird diese Aufgabe der vorliegenden Erfindung erstmals durch eine völlig neue Messphilosophie: Die Länge des Kabelendstückes soll weder durch Voreinstellung aktiv bestimmt, noch nach dem axialen Einspannen gemessen werden, sondern erfindungsgemäss vielmehr bereits während des Einschiebens in die Abisoliervorrichtung. Aus diesem neuen, erfindungsgemässen Messkonzept ergeben sich überraschende Vorteile im Vergleich zum Bekannten:

Der zeitliche Messaufwand für die Längenmessung wird praktisch auf Null reduziert, da die Messung gleichzeitig mit dem Einschieben des Kabels erfolgt. Die Konsistenz des Kabels spielt dabei grundsätzlich deshalb keine grosse Rolle, da bei entsprechender Auslegung der Messeinrichtung auch ein weiches oder gekrümmtes Kabel ausreichend genau gemessen werden kann. Das Längenmessen im Sinne der Erfindung betrifft dabei Messvorgänge mit einer stufenlos wirkenden - insbesondere berührungslosen - Messvorrichtung, umfasst jedoch auch inkrementale bzw. digitale bzw. stufenförmige Messmethoden. Im vereinfachten Extremfall kann die Messmethode sogar das Messen durch das Auge des Bedienpersonals z.B. entlang eines eingebauten Massstabes oder entlang eines auf den Kabeln aufgedruckten Massstabes umfassen.

Grundsätzlich dient die erfindungsgemässe Vorrichtung zum Abisolieren herkömmlicher Kabel, die jedoch gegebenenfalls auch vorbehandelt sein können. So ist es beispielsweise denkbar, an der Oberfläche eines Kabels längenmesskompatible Markierungen anzubringen oder sonstige Informationen aufzudrucken, die einen - insbesondere lichtoptischen - Messvorgang unterstützen.

Ein Spannmittel im Sinne der Erfindung ist eine Vorrichtung, die das eingeführte Kabel in einer bestimmten Axialposition festhält. Bei Bedarf kann die selbst auch relativ zum Rahmen der Abisoliervorrichtung verschiebbar sein. Spannmittel sind nicht auf Spannbacken allein eingeschränkt. Sie könnte auch drehbare Spannrollen o.dgl. aufweisen. Spannrollen sind dabei im Weitestens auch nicht eingeschränkt auf Einzelrollen; es könnten auch mehrere Rollen oder Rollen mit Förderbändern o.dgl. zur Anwendung gelangen. Letztendlich kommt es bekanntlich beim Abisolieren auf eine Relativbewegung der Messervorrichtung zu den Spannmittel an. Die vorliegende Erfindung umfasst alle Möglichkeiten zur Herstellung einer solchen Relativbewegung, jedoch ausdrücklich nicht einen Endlosvorschub eines Endloskabels in einer Endloskabelverarbeitungsmaschine mit Antriebsrollen oder Antriebsbändern, wie z.B. den Aufbau "Powerstrip 9500" der Anmelderin.

Die Aufgabenlösung findet in den Merkmalen der unabhängigen Patentansprüche bzw. in den unabhängigen Teilen der Ansprüche 1,2 und 7 ihren Niederschlag. Bevorzugte Ausgestaltungen und Weiterbildungen sowie Varianten des erfindungsgemässen Verfahrens bzw. der erfindungsgemässen Vorrichtung sind in den davon abhängigen Ansprüchen beschrieben bzw. unter Schutz gestellt.

Bei den möglichen Ausgestaltungen der Erfindung können andere Masse quasi berührungslos erfasst werden. Das können erfindungsgemäss z.B. Dicken- oder Typen-Informationen sein, die am Kabel entweder in codierter Form aufgebracht sind und quasi nur abgelesen werden, oder die mittels Messeinrichtung echt gemessen werden. In der IndusLrie sind verschiedenste Messvorrichtungen bekannt, die dazu eingesetzt werden könnten, so zB. Parallellichtprojektoren mit optischer Abtastung, Videokameras mit rechnerischer Bildauswertung usw.

Anhand von verschiedenen, beispielhaften Ausführungen wird die Erfindung - insbesondere für die Längenmessung - näher beschrieben. Einige dieser Ausführungsbeispiele sind in Figuren skizzenhaft dargestellt, es zeigen dabei:
Fig.1 einen Aufbau gemäss der erwähnten WO98/08283, jedoch mit starren Führungsstangen;
Fig.2 eine Variante dazu mit kuppelbaren Führungsstangen;
Fig.3 einen Aufbau mit zwei als Spannvorrichtung wirkenden Rollen;
Fig.4 eine Variante dazu mit einem Messrad;
Fig.5 eine Variante mit starren Spannbacken und einem Diodenarray zur optischen Längenabtastung;
Fig.6 eine Variante mit Längenmessung über Bildverarbeitung;
Fig.7 einen Aufbau mit in Spannbacken integrierten Lichtwellenleitern zur optischen Oberflächenabtastung und Signalübertragung an optische Längenmessensoren;
Fig.7a-7d schematische Messdiagramme an einer Vorrichtung gem. Fig.7;
Fig.8 eine Variante einer Messvorrichtung, die auf lichtoptische Sensoren verzichtet und
Fig.9 das Prinzipschema des neuen Abisoliervorgangs mit Längenmessung;

Die Figuren werden zusammenhängend beschrieben. Gleiche Bezugszeichen bedeuten gleiche Bauteile, gleiche Bezugszeichen mit unterschiedlichen Indizes bedeuten funktionsähnliche Bauteile. Auf die grundsätzlichen mechanischen Aufbauten der verschiedenen, beispielhaft dargestellten Abisoliervorrichtungen braucht nicht näher eingegangen zu werden, da diese einem Fachmann bekannt sind und beispielsweise aus der EP-B-195932 aber auch z.B. durch die Typen 2015, 2500, 207, 8015 der Anmelderin beispielhaft geoffenbart sind.

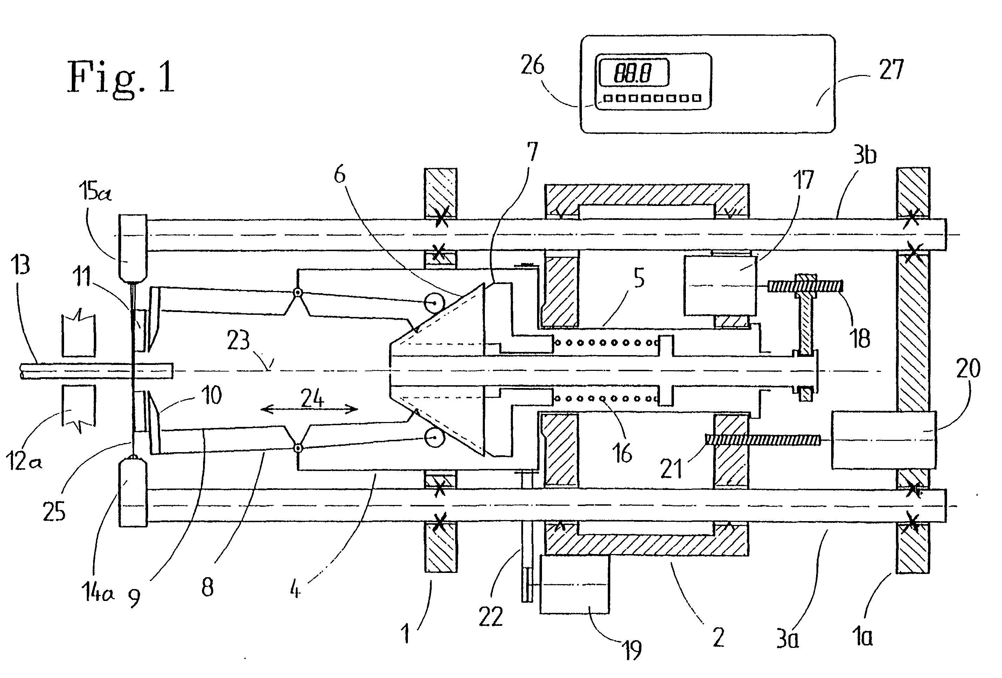

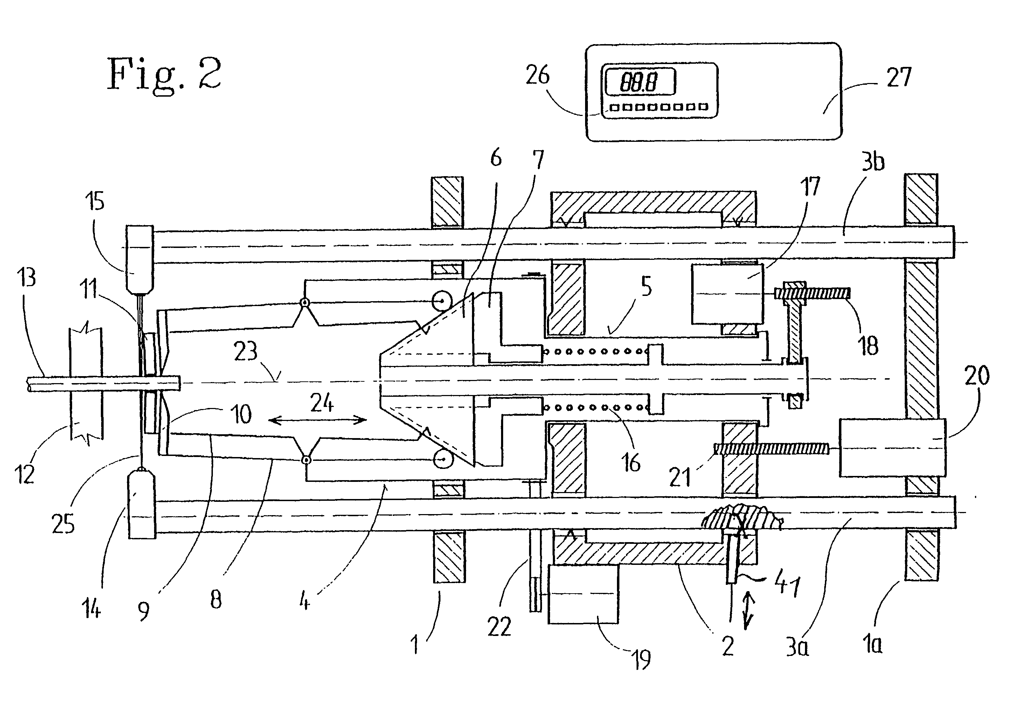

Die vorliegende Erfindung nimmt ausdrücklich Bezug auf Aufbauten entsprechend der WO98/08283 mit ihrem Prioritätsdatum vom 21.8.1996. Die dort angegebenen Aufbauten, insbesondere die Aufbauten gemäss den Figuren 1 und 2 gelten als im Rahmen der vorliegenden Anmeldung geoffenbart. Die dort angegebenen Details in bezug auf die Anordnung eines optischen Sensors zum optischen Detektieren einer Längenmessung könnten mit der vorliegenden Erfindung gemäss Aufbau Fig.2 kombiniert werden. Ausdrücklich wird auch auf die Details der Ansprüche 3-8 und 10 verwiesen, deren Merkmale mit Vorteil auch bei der gegenständlichen Erfindung anwendbar sind. Die in der angegebenen WO-Patentanmeldung vorgesehene axiale Verfahrbarkeit des lichtoptischen Sensors ist für die vorliegende Erfindung selbstverständlich keine Bedingung, kann jedoch gegebenenfalls trotzdem vorgesehen sein. Es ist auch ein Mischbetrieb oder das Durchführen von unterschiedlichen Messarten hintereinander im Rahmen der möglichen Ausgestaltungen der Erfindung denkbar. Von Bedeutung ist die Tatsache, dass die vorliegende Erfindung keinesfalls auf rotierende Abisoliermesser eingeschränkt ist, sondern bei jeglicher Art Abisoliervorrichtungen anwendbar ist, bei der Kabelendstücke hinter bzw. unter bzw. durch geöffnete Spannbacken geschoben werden, um anschliessend eingespannt - gegebenenfalls weitergeschoben - und bearbeitet zu werden. Daraus ergibt sich auch der wesentliche Unterschied zu herkömmlichen Endlosabisoliervorrichtungen, bei denen von einer Endloskabeltrommel Kabel abgewickelt und mittels Förderrollen oder Förderbändern kontinuierlich einer Bearbeitungsstelle zugeführt werden. Die dort angewendeten Messtechniken für die Längenmessung gehen infolge der gänzlich unterschiedlichen Kabelzuführart von gänzlich anderen Voraussetzungen aus und waren offensichtlich bis zum Tag der vorliegenden Erfindung nie vorgesehen, auch bei der vorliegenden Kategorie von Abisoliermaschinen zum Einsatz zu gelangen.

Die Fig. 1 und 2 entsprechen einem Aufbau gemäss der erwähnten WO98/08283, weisen gegenüber dem dort gezeigten Aufbau jedoch folgende Modifikationen auf: Anstelle verschieblicher Führungsstangen 3, sind diese Führungsstangen gem.Fig.1 starr mit dem Rahmen 1 der Abisoliervorrichtung verbunden. An ihrem kabelseitigen Ende tragen sie einen optischen Sensor 14 bzw. 15a, wobei der eine als Sender und der andere als Empfänger ausgebildet ist. Die an sich bekannten - und durch verschiedene optische Massnahmen realisierbaren - Sensoren 14a,15a stehen somit in einer ortsfesten Beziehung zu einer Spannvorrichtung 12a und dem Rahmen 1. Ein durch die Spannvorrichtung 12a geschobenes Kabelende 13 wird durch die optischen Sensoren, die mit einer entsprechenden elektronischen Steuerung 27 mit einer entsprechenden Auswerteschaltung gekoppelt sind, längengemessen. Der Vorgang des Entlanggleitens der Messer 10 und der Zentrierbacken und 11 an dem Kabelmantel 13 - wie aus dem zweiten Verfahren gem. dem Stand der Technik bzw. aus der erwähnten EP-A bekannt - kann bei der vorliegenden Erfindung somit entfallen. Dies unterscheidet sie grundsätzlich vom Aufbau der erwähnten WO98/0828 Anmeldung.

Im Rahmen der möglichen Ausgestaltungen der vorliegenden Erfindung liegen jedoch durchaus auch Kombinationen mit Messmethoden entsprechend der erwähnten WO98/08283 Anmeldung. Solche Kombinationen können dadurch realisiert sein, dass die Führungsstangen 3 durch eine Kupplung 41 wahlweise in einem Laufschlitten 2 festlegbar oder von diesem lösbar sind, wie beispielhaft in Fig.2 dargestellt. Im fest verbundenen Zustand dienten die Sensoren 14a und 15a lediglich, wie in der WO98/08283 beschrieben, als Endsensoren, während die eigentliche Messung am encodierten Motor 20 für den Längsverschub des Laufschlittens erfolgt. Im gelösten Zustand (wie dargestellt in Fig.2) sind die Sensoren 14a und 15b jedoch, wie gem. Fig.1, im direkten Messbetrieb. D.h. die Elektronik in der elektronischen Steuerung 27 misst aufgrund der Signale des Empfängersensors 14 die aktuelle Länge des eingeschobenen Kabelendstückes kontinuierlich während des Einschiebens. Die Kupplung 41 kann unterschiedlich ausgebildet sein. Es kann sich um magnetisch wirkende Haftkupplungen, oder auch einfache Rastkupplungen, die händisch oder motorisch antreibbar sind, wie symbolisch dargestellt, handeln.

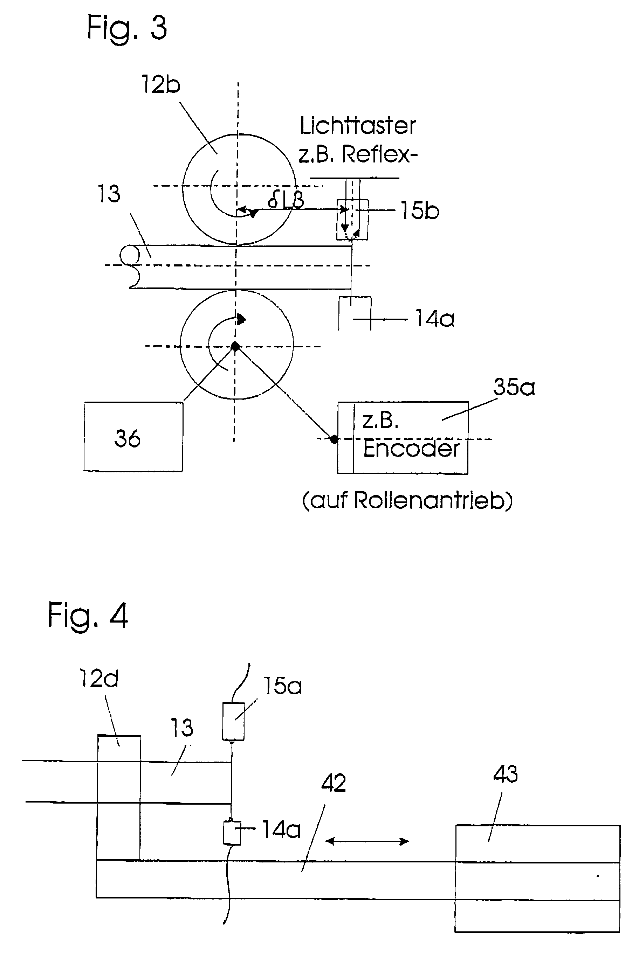

Fig. 3 zeigt einen Aufbau mit zwei als Spannvorrichtung wirkenden Rollen 12b, die radial an das Kabelendstück 13 anlegbar sind. Diese Rollen 12b sind mit einem Encoder 35a verbunden, der ihre Drehbewegung in eine Längenangabe über das durch sie durchgeschobene Kabelendstück 13 umwandelt. Getriggert wird dieser Längenmessvorgang z.B. durch einen lichtoptischen Reflextaster, der symbolisch durch 15b und 14a dargestellt ist. Selbstverständlich ist in der nicht näher gezeigten Steuerung der starre Abstand δL3 zwischen Rollendrehachse und Messlinie des Reflextasters bekannt. Alternativ können die Rollen 12b, die zunächst nur eine Spannund Messfunktion übernehmen, auch mit einem Drehantrieb 36 verbunden sein, der das Kabelendstück gesteuert in die Abisoliervorrichtung einschiebt und gegebenenfalls auch wieder herauszieht, so dass der eigentliche Einschubvorgang nicht mehr händisch, sondern motorisch gesteuert erfolgt. Bei dieser Erfindung ergibt sich als Vorteil eine höhere Einführpräzision und gegebenenfalls auch eine höhere Einschubgeschwindigkeit, als beim händischen Einführen. Weiters können solche Rollen auch unmittelbar beim Abisoliervorgang mitwirken, indem sie das Kabel gegen geschlossene Messer zurückziehen, so dass der Abisoliervorgang und der Rückzugsvorgang des Kabels zusammengelegt werden. Eine solche Abisoliermaschine unterscheidet sich dabei noch immer wesentlich von Abisoliervorrichtungen mit Endloskabelzuführung und von integrierten Kabelbearbeitungsautomaten. Mitumfasst sind durch diesen neuen Gedanken auch axial verschiebbare Spannbacken, über deren Vorschubweg die Kabellänge unmittelbar gemessen wird. Im weiteren könnten dies auch aussenliegende Manipulatoren mit eigenen Antrieben sein.

Eine Variante dazu ist in Fig. 4 dargestellt, bei der anstelle von rotierenden Spannrollen 12b Spannbacken 12d zum Einsatz gelangen, die an einer Verschubstange 42 gesteuert durch einen Verschubantrieb 43 längs verschiebbar sind. Bei diesem Aufbau wird das Kabelendstück 13 bereits vor dem eigentlichen Messvorgang durch die Spannbacken 12d eingespannt. Dies erfolgt in einem Bereich, entfernt von der Längenmesseinrichtung und der Schneidevorrichtung. Der Verschubantrieb 43 bewegt sodann das Kabelendstück 13 gesteuert in Einschubrichtung weiter. Da dieses Weiterschieben dem manuellen Einschubvorgang eines Kabels entspricht, führt dies zu keinem Zeitverlust.

Der Verschubantrieb erfolgt encodiert, wobei das Startsignal für die Längenmessung durch das Durchschreiten des Endes des Kabelendstückes 13 z.B. einer Lichtschranke (14a,15a) getriggert wird.

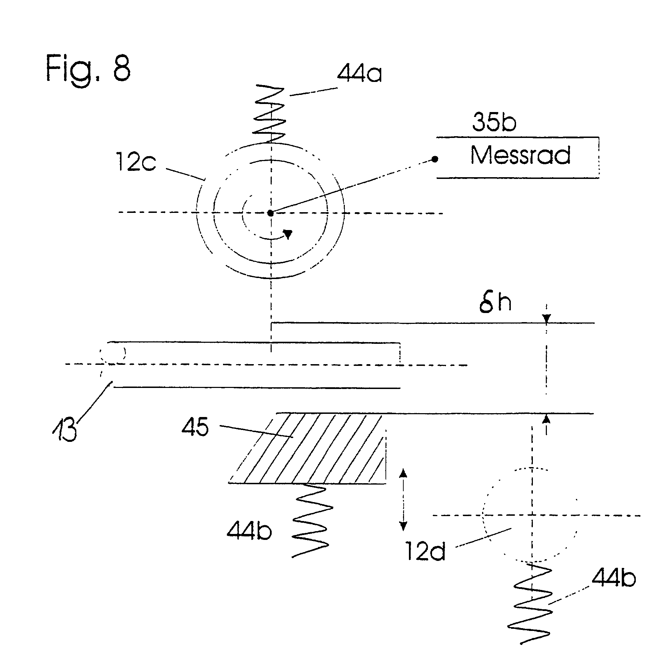

Die Fig.8 zeigt als weiteres Beispiel eine Variante einer Messvorrichtung, die auf lichtoptische Sensoren verzichtet und statt dessen ein Messrad 12c anwendet. Das Messrad 12c hat beim vorliegenden Ausführungsbeispiel keine Spann- oder Transportfunktion, sondern dient lediglich der Längenmessung. Beim symbolisch dargestellten Ausführungsbeispiel ist das Messrad durch eine Andrückfeder 44 in radialer Kabelrichtung federbelastet. Dem Messrad 12c, das mit einem Encoder o.dgl. 35b gekoppelt ist, ist eine Rampe bzw. Gleitfläche 45 gegenübergestellt. Anstelle der Rampe 45 könnte auch eine Rolle 12d vorgesehen sein, wobei diese bevorzugt ebenso mittels Feder 44b in Kabelradialrichtung federbelastet ist. Ein Vorteil eines solchen Aufbaus liegt in der Unabhängigkeit von der Kabelform. Auch stärker gekrümmte Kabel können gut gemessen werden.
Eine weitere beispielhafte Idee dient dem Verzicht auf Lichtoptik: Wird bei der letztgenannten Ausführungsform ein Kabel eingeschoben, triggert dieses zunächst durch das Aufspreizen von Messrad 12c und Rampe 45 bzw. Rolle 12d den Beginn des Messvorganges. Da bei dieser Ausbildungsform unterschiedliche Kabeldurchmesser zu unterschiedlichen Längenmessungen führen könnten, da dünnere Kabel den Messvorgang erst näher der Vertikalen durch die Rolle triggern könnten, kann bei einer speziellen Ausbildung dieser Vorrichtung auch die Gesamthöhe der Aufspreizung (δh) gemessen werden und rechnerisch berücksichtigt werden.

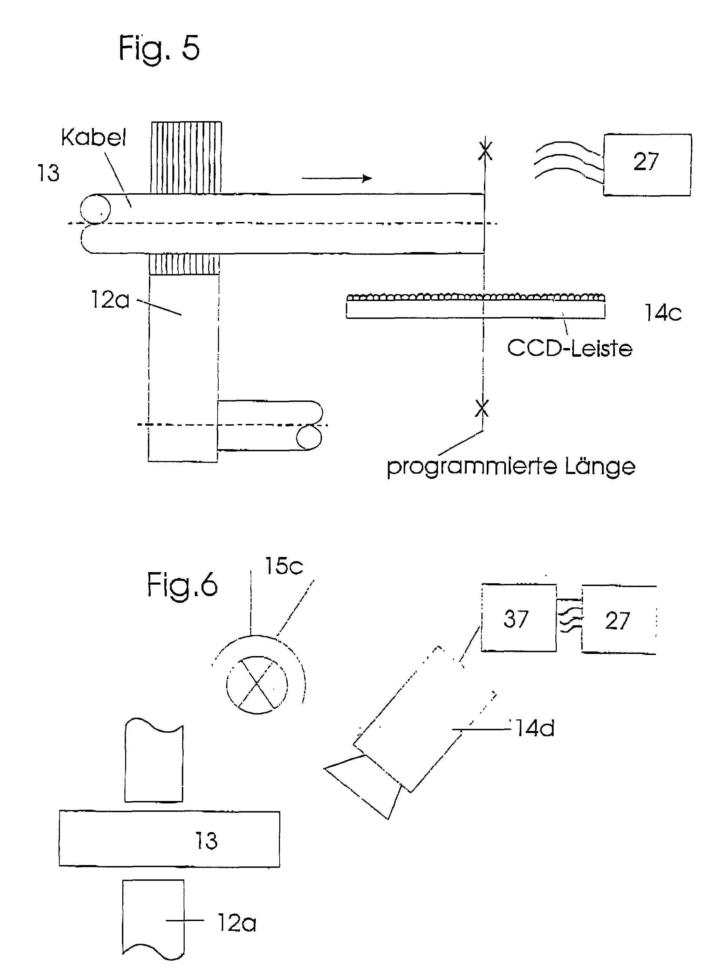

Die Ausführung gemäss Fig. 5 bezieht sich auf eine Vorrichtung mit vorzugsweise axial starren Spannbacken 12a. Hinter diesen Spannbacken 12a ist ein Diodenarray 14c (z.B. CCD) angeordnet, das unter entsprechend gewählter (z.B. paralleler Strahlengang) Beleuchtung die Länge des eingefahrenen Kabelendstückes 13 unmittelbar abtastet. Dieser Aufbau eignet sich insbesondere für gerade Kabel. Die Steuerung 27 kann bei Bedarf so gewählt sein, dass nach Erreichen einer programmierten Länge die Spannbacken 12a schliessen. Dieser Vorgang ist übrigens in der Regel auch bei den übrigen Vorrichtungen vorteilhaft. Bei Bedarf kann, da dieser Schliessvorgang zu Ungenauigkeiten führen kann, auch eine Nachjustierung vorgenommen werden, sobald die Längenmessvorrichtung, im Fall der Fig. 5 das Diodenarray 14c, ein Überschreiten oder Unterschreiten der programmierten Länge feststellt. Die Justierung kann dabei durch eine entsprechende Berücksichtigung bei den Schneidmessern Niederschlag finden oder zu einem direkten Verschieben des Kabels mit Hilfe einer axialen Verschubmöglichkeit der Spannbacken 12a erfolgen.

Bei der Vorrichtung gemäss scnematischer Fig.6 erfolgt die Längenmessung durch Bildverarbeitung mittels - an sich bekannter - Bildverarbeitungsvorrichtung 37, die mit der Steuerung 27 gekoppelt ist. Durch entsprechende Auslegung der Bildverarbeitungssoftware ist es möglich, auch bei Kabeln mit beliebigen Krümmungen die Länge zu bestimmen. Ausserdem bietet dieser Aufbau noch den Vorteil, ein direktes Bild von der Lage des Kabels und von der Stellung der Werkzeuge im Bereich des Kabels - zu Beobachtungszwecken oder zur Dokumentation - in maschinenverarbeitbarer Form vorliegen zu haben. Symbolisch ist auch eine Beleuchtung 15c dargestellt, die gegebenenfalls auch im IR-Bereich operiert. Selbstverständlich umfasst die vorliegende Variante auch Aufbauten mit einer Stereokamera zur dreidimensionalen Raumerfassung.

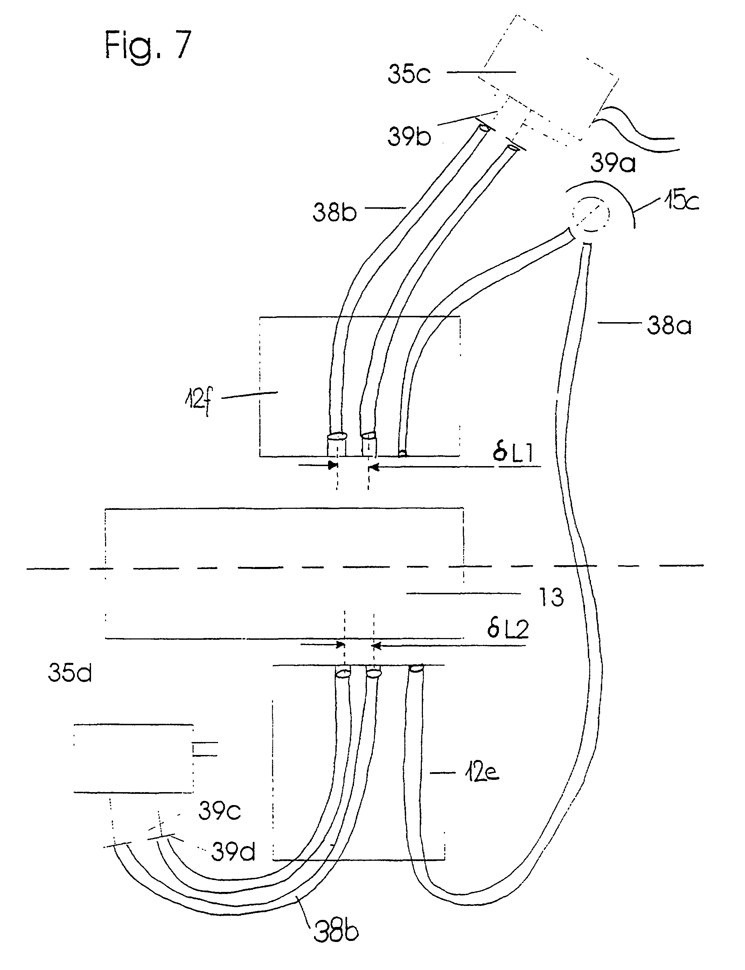

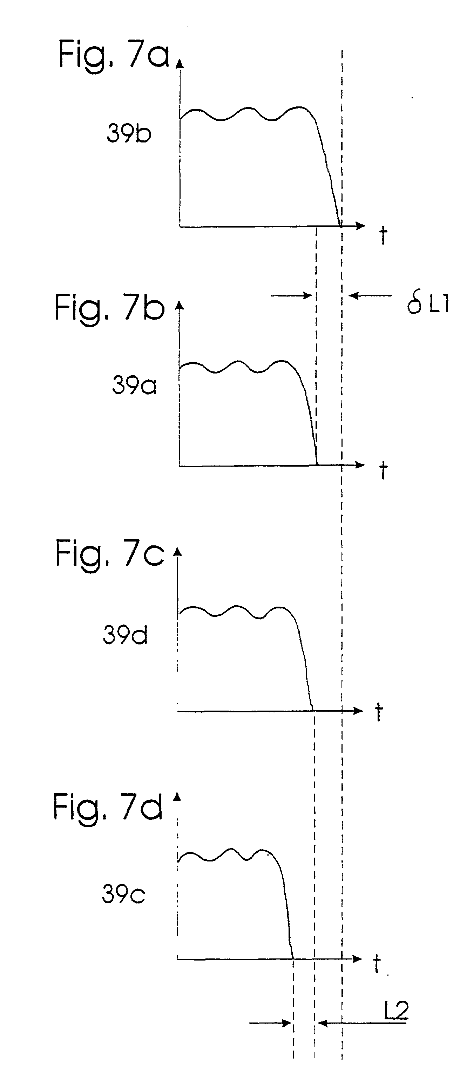

Fig.7 deutet symbolisch eine Spannbackenanordnung 12e und f an, in die Lichtwellenleiter 38 integriert sind, die einerseits einer etwaigen Beleuchtung (38a und 39a), andererseits aber auch dem Aufnehmen von Längeninformationen dienen.

Eine mögliche Längenerfassungsmethode ist zusammen mit den Fig. 7a-7d beispielhaft erklärt. Es handelt sich dabei um eine Methode, die zur Längenmessung komparative Oberflächenanalysatoren 35c,d aufweist - die gegebenenfalls an zu Messzwecken aufgedruckten Längeninformationen oder an der natürlichen Oberflächenbeschaffenheit, der Kabel messen:

Oberflächenanalysatoren 35c und 35d betrachten durch die Lichtwellenleiter 38b an je zwei axial aufeinanderfolgenden Stellen die Kabeloberfläche. Die kabelseitigen Enden der Lichtwellenleiter 38b liegen dabei in einem bestimmten Abstand δL1 bzw. δL2 zueinander. Wird nun ein Kabel 13 eingeschoben, kommt es infolge des krassen Wechsels im Beobachtungsfeld zu einem steilen Signalanstieg an Signalempfängern 39 a-d, die an den sensorseitigen Lichtwellenleiterenden angebracht sind. Ein solcher beispielhafter Signalverlauf ist in den Fig. 7a-7d angedeutet. Um nun den Längenmessbeginn zu detektieren, wird beispielsweise der rasche Signalanstieg am Sensor 39a gemäss Fig. 7b gewählt, der nach einem raschen Signalanstieg am Sensor 39b gem. Fig.7a erfolgt. Infolge der natürlich oder künstlich modulierten Oberfläche jedes Kabels (Unebenheiten an der Oberfläche, Markierungen etc.) ergibt sich bei weiterem Einschieben ein ebenso moduliertes Signal am Sensor 39a, das jeweils zeitversetzt zuvor bereits am Sensor 39b aufgetreten ist. Die zeitliche Versetzung ist dabei ein Mass für die Einschubgeschwindigkeit, die in der Kegel weniger interessiert. Da die beiden Sensoren 39a und 39b jedoch durch die räumliche Plazierung der kabelseitigen Lichtwellenleiterenden in einem Abstand δL1 zueinander liegen, kann man aus der Tatsache der Signalwiederholung die eingeschobene Länge durch Addition entsprechend vieler Teillängen δL1 errechnen. Da infolge der dünnen Ausführbarkeit von Lichtwellenleitern dieser Abstand sehr klein gewählt werden kann, erlaubt diese Methode eine genaue Längenmessung. Die Genauigkeit dieser Messmethode kann dadurch verbessert werden, dass ein zweites Paar Sensoren 39c und d - insbesondere axial und um den Umfang des Kabels 13 - versetzt angeordnet ist und zwischen den Ergebnissen beider Sensorpaare 39a,b und 39c,d mittels Korrekturrechnung der Längenwert genauer ermittelt wird. Symbolisch ist noch eine Lichtquelle 15c angedeutet, die insbesondere so angebracht ist, dass sie die Oberflächenstrukturen am Kabel 13 besonders hervorhebt (z.B. Schattenwirkung, spezielle Lichtfarbe usw.).

Anstelle dieser beispielhaften Lichtoptik liegen im Rahmen der möglichen Ausgestaltungen der Erfindung aber auch andere, an sich bekannte Methoden wie z.B. kapazitive oder induktive Messungen direkt am Kabel.

Eine weitere mögliche die Ausgestaltung besteht in der Beschriftung eines Kabels mit Maschinensteuerungsinformationen vor dem Abisolieren, z.B. vor, während oder nach dem Ablängen, wobei die Abisoliermaschine oder die Ablängmaschine mit einem Sensor bzw. mit einer Leseeinrichtung ausgestattet ist, mit der diese Steuerungsinformationen abgelesen und in die Maschinensteuerung eingebracht wird, so dass der Anwender die Abisolier- oder Ablängmaschine nicht mehr gesondert programmieren muss; die Programmierung gewissermassen selbsttätig erfolgt. Als Beschriftung kommen jedwede Code, wie Barcode, numerischer Code, Strichcode usw. infrage.

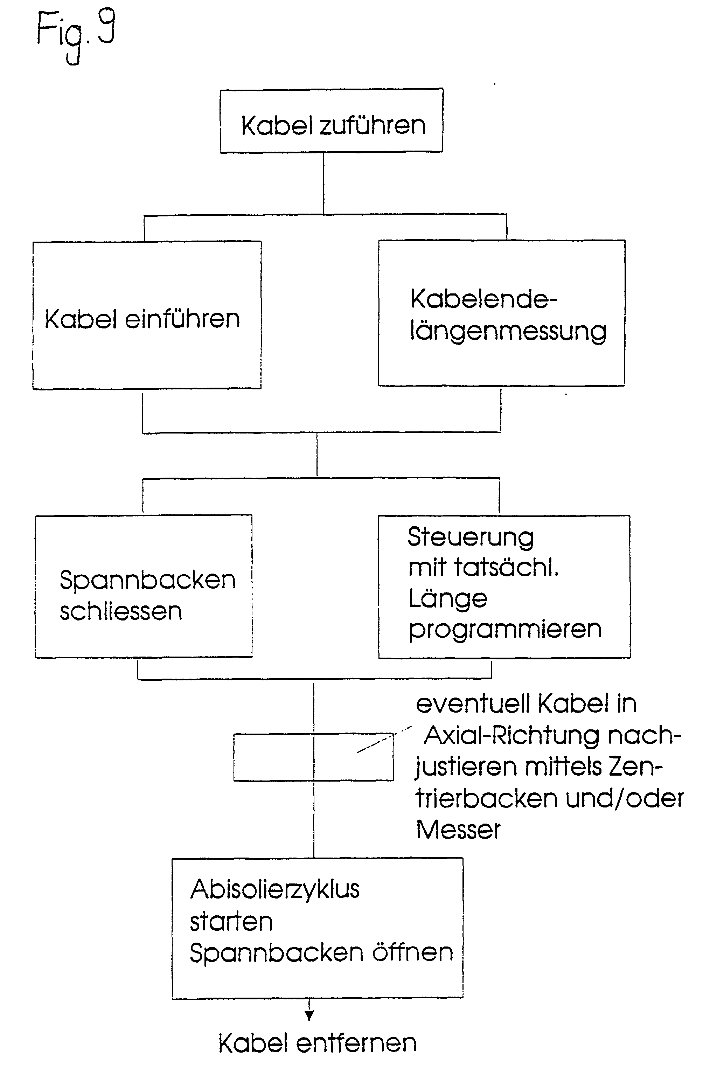

Fig.9 zeigt einen schematischen Ablauf mit sich selbsterklärenden Verfahrensschritten, wobei das Nebeneinanderliegen von Verfahrensschritten deren Gleichzeitigkeit bedeutet. Gleicnzeitigkeit im Sinne der Erfindung ist nur bevorzugt, bzw. können sich die einzelnen Verfahrensschritte auch überlappen.

### Bezugszeichenliste

- 1,1a: Fester Rahmen
- 2: Laufschlitten
- 3: Führungsstangen
- 4: Abisolierkopf vorzugsweise rotierbar
- 5: Kopfwelle
- 6: Keilfläche für Messerhebel
- 7: Keilfläche für Zentrierbackenhebel
- 8: Messerhebel
- 9: Zentrierbackenhebel
- 10: Abisoliermesser, Schneidvorrichtung
- 11: Zentrierbacken
- 12: Spannbacken, Spannvorrichtunq; 12b,d Rolle 12e Messrad
- 13: Kabelendstück
- 14: optischer Sensor; 14a Lichtschranke; 14c Diodenarray; 14d Abbildungsaufzeichnungseinheit
- 15: optischer Sensor; 15a Lichtschranke; 15b Lichttas ter; 15c Beleuchtung
- 16: Andrückfeder für Zentrierbacken
- 17: Antriebsmotor für Steuerung mit Encoder, Schrittmotor, potentiometer-gesteuert o.dgl.
- 18: Gewindespindel für Messer-Zentrierbacken Steuerung
- 19: Motor für Kopfrotation
- 20: Motor für Axialvorschub mit Encoder, Schrittmotor, potentiometer-gesteuert o.dgl.
- 21: Gewindespindel für Laufschlitten Vorschub
- 22: Antriebsriemen
- 23: Zentrier- bzw. Drehachse
- 24: Pfeil
- 25: Lichtstrahl
- 26: Eingabeeinheit
- 27: Elektronische Steuerung
- 35: Längenmessvorrichtung;
- 35a: Encoder auf Rollen(antrieb)
- 35b: Messrad
- 35c-d: Oberflächenanalysatoren
- 36: Antrieb für Rolle
- 37: Bildverarbeitungsvorrichtung;Bildauswerteeinheit
- 38: Lichtwellenleiter, Glasfaserkabel;
- 39: Signalempfänger
- 40: Manipulatorarm
- 41: Kupplung
- 42: Verschubstange
- 43: Verschubantrieb
- 44: Andrückfeder
- 45: Rampe bzw. Gleitfläche

## Patentansprüche

1. Abisoliervorrichtung mit wenigstens einer Messervorrichtung (10) einer Längenmesseinrichtung und einer Computersteuerung für das gesteuerte Einschneiden der Messervorrichtung (10) in ein Kabel, **dadurch gekennzeichnet, dass** die Längenmesseinrichtung (35) ausschliesslich als eine berührungslos wirkende und beim Kabelzuführen kontinuierlich messende Kabellängen-Abtastvorrichtung ausgebildet ist.

2. Verfahren zum längendefinierten Abisolieren eines Kabels (13) in einer Abisoliervorrichtung mit Spannmittel (12) und wenigstens einem Messer (10), insbesondere nach Anspruch 1, **dadurch gekennzeichnet, dass** die Lange des Kabel Endstücks (13), das hinter die axiale Ausgangsposition der Spannmittel (12) eingeschoben wird, mit Hilfe einer bzw. der Langenmessvorrichtung während des axialen Einschiebens hinter die axiale Ausgangsposition der Spannmittel abgemessen wird und dieser aktuelle Messwert zur Stederung der axialen Relativbewegung des Messers (10) zu den Spannmitteln (12) verwendet wird.

3. verfahren gemäss Anspruch 2, **dadurch gekennzeichnet, dass** die Längenraessung berührungslos - vorzugsweise über lichtoptische Sensoren (14,15) durchgeführt wird.

4. Verfahren nach Anspruch 2 oder 3, **dadurch gekennzeichnet, dass** das detektierte Erreichen einer bestimmten Einschublänge des Kabelendstückes (13) das Schliessen der Spannmitteln (12) und den Start eines Abisolierzyklus triggert.

5. Verfahren nach einem der Ansprüche 2-4, **dadurch gekennzeichnet, dass** unter Zuhilfenahme verschiebbarer Spannund/oder Zentrierbacken (12,11) das Kabelendstück (13) nach der Längenmessung motorisch gesteuert in seine endgültige Abisolierposition axial verscheben wird.

6. Verfahren nach einem der vorhergehenden Ansprüche, **dadurch gekennzeichnet, dass** das Kabelendstück (13) durch einen Manipulatorarm (40) in die Abisoliervorrichtung eingeschoben wird, wobei dieser Manipulstorarm (40) die Spannfunktion der Spanneinrichtung übernimmt und die Längenmessung am Kabelendstück (13) gleichzeitig dessen axiale Lage relativ zum Manipulatorarm (40) für weitere Kabelbearbeitungsvorgänge bzw. Kabelbearbeitungsstationen definiert.

7. Kabelendenabisoliervorrichtung mit Spannmitteln (12), einer Schneidevorrichtung (10) und einer Längenmessvorrichtung (14,15;35), **dadurch gekennzeichnet, dass** die Längenmessvorrichtung (14,15;35) Mittel umfasst für das kontinuierliche Längenmessen des Kabelendstückes (13) eines Kabels, das hinter die axiale Ausgangsposition der Spannmittel eingeschoben wurde, während des Einschiebens des Kabels hinter die Spannmitteln (12).

8. Vorrichtung nach Anspruch 7, **dadurch gekennzeichnet, dass** die Spannmitteln Spannbacken (12a) umfassen und in axialer Richtung des Kabelendes (13) starr, relativ zu einem festen Rahmen (1), festgelegt ist.

9. Vorrichtung nach Anspruch 7, **dadurch gekennzeichnet, dass** die Spannmitteln wenigstens eine Rolle (12b) oder einen Bandantrieb umfassen, die in Einschubrichtung drehbar ist und mit der Längenmessvorrichtung (35a) verbunden ist, und/oder dass die Längenmessvorrichtung ein Messrad (35b) umfasst.

10. Vorrichtung nach Anspruch 9, **dadurch gekennzeichnet, dass** wenigstens eine der Rollen (12b) mit wenigstens einem Antrieb (36) für das angetriebene und vorzugsweise gesteuerte Einführen und/oder Ausgeben des Kabelendes (13) verbunden ist.

11. Vorrichtung nach einem der Ansprüche 1 oder 7-10, **dadurch gekennzeichnet, dass** die Längenmessvorrichtung lichtoptische Sender und/oder Empfänger (14,15) aufweist.

12. Vorrichtung nach Anspruch 11, **dadurch gekennzeichnet, dass** die Langenmesseinrichtung einen Lichttaster (15b) - z.B. einen Reflextaster oder eine Lichtschranke (14a,15b)-umfasst.

13. Vorrichtung nach Anspruch 11, **dadurch gekennzeichnet, dass** die Längenmesseinrichtung ein Diodenarray (14c) z.B. ein CCD umfasst, das hinter den Spannmitteln (12), parallel zum einzuführenden Kabelendstück (13), angeordnet ist.

14. Vorrichtung nach Anspruch 11, **dadurch gekennzeichnet, dass** eine videcoptische Abbildungs- bzw. Aufzeichnungseinhelt (14d) vorgesehen ist, die vorzugsweise mit einer Bildauswerteeinheit (37) für das bildrechnerische Ermitteln der Kabellänge gekoppelt ist.

15. Vorrichtung nach einem der Ansprüche 11-14, **dadurch gekennzeichnet, dass** die Längenmessvorrichtung für die Beleuchtung und/oder Abtastung von Längeninformationen, Glasfaserkabel bzw. optische Lichtwellenleiter (38) umfasst.

16. Vorrichtung nach einem der Ansprüche 11-15, **dadurch gekennzeichnet, dass** die Längenmesseinrichtung komparative Oberflächenanalysatoren (35c,d) aufweist, die gegebenenfalls an zu Messzwecken aufgedruckten Längeninforniationen messen.

17. Vorrichtung nach einem der Ansprüche 11-16, **dadurch gekennzeichnet, dass** lichtoptische Geber und/oder Sensoren in Spann- Zentrier- oder Führungsvorrichtungen integriert sind.

18. Vorrichtung nach einem der vorhergehenden Ansprüche 7-17, **dadurch gekennzeichnet, dass** mehrere voneinander unabhängig wirkende Längenmesseinrichtungen vorgesehen sind, von denen wenigstens eine berührungslos arbeitet.

## Claims

1. Insulation stripping apparatus comprising at least one knife apparatus (10) of a length measuring means and a computer control for controlled incision by the knife apparatus (10) into a cable, **characterized in that** the length measuring means (35) is formed exclusively as a noncontact cable length scanning apparatus measuring continuously during the cable feed.

2. Method for stripping insulation from a cable (13) over a defined length in an insulation stripping apparatus comprising clamping means (12) and at least one knife (10), in particular according to Claim 1, **characterized in that** the length of the cable end section (13) which is inserted behind the axial starting position of the clamping means (12) is measured with the aid of a or the length measuring apparatus during the axial insertion behind the axial starting position of the clamping means and this actual measured value is used for controlling the axial movement of the knife (10) relative to the clamping means (12).

3. Method according to Claim 2, **characterized in that** the length measurement is carried out without contact - preferably by means of optical sensors (14, 15).

4. Method according to Claim 2 or 3, **characterized in that** the detected reaching of a specific inserted length of the cable end section (13) triggers the closing of the clamping means (12) and the start of an insulation stripping cycle.

5. Method according to any of Claims 2-4, **characterized in that**, with the aid of displaceable and/or centring jaws (12, 11), the cable end section (13) is moved axially to its final insulation stripping position after the length measurement under motor control.

6. Method according to any of the preceding Claims, **characterized in that** the cable end section (13) is inserted into the insulation stripping apparatus by a manipulator arm (40), this manipulator arm (40) performing the clamping function of the clamping means, and the length measurement on the cable end section (13) simultaneously defines its axial position relative to the manipulator arm (40) for further cable processing operations or cable processing stations

7. Cable end insulation stripping apparatus comprising clamping means (12), a cutting apparatus (10) and a length measuring apparatus (14, 15; 35), **characterized in that** the length measuring apparatus (14, 15; 35) comprises means for the continuous length measurement of the cable end section (13) of a cable, which was inserted behind the axial starting position of the clamping means, during the insertion of the cable behind the clamping means (12).

8. Apparatus according to Claim 7, **characterized in that** the clamping means comprise clamping jaws (12a) and are fixed rigidly, relative to a fixed frame (1), in the axial direction of the cable end (13).

9. Apparatus according to Claim 7, **characterized in that** the clamping means comprise at least one roller (12b) or one belt drive which is rotatable in the insertion direction and is connected to the length measuring apparatus (35a), and/or that the length measuring apparatus comprises a measuring wheel (35b).

10. Apparatus according to Claim 9, **characterized in that** at least one of the rollers (12b) is connected to at least one drive (36) for the driven and preferably controlled introduction and/or ejection of the cable end (13).

11. Apparatus according to any of Claims 1 or 7-10, **characterized in that** the length measuring apparatus has optical transmitters and/or receivers (14, 15).

12. Apparatus according to Claim 11, **characterized in that** the length measuring means comprises a light scanner (15b) - for example a reflection barrier or a light barrier (15a, 15b).

13. Apparatus according to Claim 11, **characterized in that** the length measuring means comprises a diode array (14c), e.g. a CCD, which is arranged behind the clamping means (12), parallel to the cable end section (13) to be inserted.

14. Apparatus according to Claim 11, **characterized in that** a video optical imaging or recording unit (14d) is provided which is preferably coupled to an image evaluation unit (37) for determining the cable length by image analysis.

15. Apparatus according to any of Claims 11-14, **characterized in that** the length measuring apparatus comprises glass fibre cables or fibreoptic cables (38) for the illumination and/or scanning of length information.

16. Apparatus according to any of Claims 11-15, **characterized in that** the length measuring means has comparative surface analyzers (35c,d) which optionally measure on length information printed on for measuring purposes.

17. Apparatus according to any of Claims 11-16, **characterized in that** optical transmitters and/or sensors are integrated in clamping, centring or guide apparatuses.

18. Apparatus according to any of the preceding Claims 7-17, **characterized in that** a plurality of length measuring means acting independently of one another are provided, at least one of which operates without contact.

## Revendications

1. Dispositif d'isolation avec au moins un dispositif à couteaux (10), une installation de mesure de longueur et une commande informatique pour la coupe motorisée faite par le dispositif à couteaux (10) dans un câble, **caractérisé en ce que** l'installation de mesure de longueur (35) est conçue exclusivement comme un dispositif de balayage de longueurs de câbles fonctionnant sans contact et mesurant en continu lors de l'introduction de câbles.

2. Procédé pour l'isolation d'une longueur définie d'un câble (13) dans un dispositif d'isolation avec des moyens de serrage (12) et au moins un couteau (10), en particulier selon la revendication 1, **caractérisé en ce que** la longueur de l'extrémité de câble (13), qui est insérée derrière la position axiale de départ des moyens de serrage (12), est mesurée à l'aide d'un ou du dispositif de mesure de longueur pendant l'insertion axiale derrière la position axiale de départ des moyens de serrage et que cette valeur actuelle de mesure est utilisée pour la commande du mouvement axial relatif du couteau (10) par rapport aux moyens de serrage (12).

3. Procédé selon la revendication 2, **caractérisé en ce que** la mesure de longueur est effectuée sans contact - de préférence par l'intermédiaire de capteurs micro-optiques (14, 15).

4. Procédé selon la revendication 2 ou 3, **caractérisé en ce que** l'atteinte détectée d'une longueur définie d'insertion de l'extrémité de câble (13) déclenche la fermeture des moyens de serrage (12) et le démarrage d'un cycle d'isolation.

5. Procédé selon une des revendications précédentes, **caractérisé en ce que** l'extrémité de câble (13) est déplacée de façon motorisée dans le sens axial jusqu'à sa position d'isolation définitive en ayant recours à des mâchoires de serrage et/ou de centrage (12, 11) mobiles après la mesure de longueur.

6. Procédé selon une des revendications précédentes, **caractérisé en ce que** l'extrémité de câble (13) est introduite par un bras manipulateur (40) dans le dispositif d'isolation, ce bras manipulateur (40) assurant la fonction de serrage de l'installation de serrage et définissant la mesure en longueur sur l'extrémité de câble (13) en même temps que sa position axiale par rapport au bras manipulateur (40) pour d'autres opérations d'usinage de câbles ou postes d'usinage de câbles.

7. Dispositif d'isolation d'extrémités de câbles avec des moyens de serrage (12), un dispositif de coupe (10) et un dispositif de mesure en longueur (14, 15 ; 35), **caractérisé en ce que** le dispositif de mesure en longueur (14, 15 ; 35) intègre des moyens pour la mesure continue de longueur de l'extrémité (13) d'un câble qui a été inséré derrière la position axiale de départ des moyens de serrage, pendant l'insertion du câble derrière les moyens de serrage (12).

8. Dispositif selon la revendication 7, **caractérisé en ce que** les moyens de serrage englobent des mâchoires de serrage (12a) et sont fixés fermement dans le sens axial de l'extrémité du câble (13) par rapport à un cadre fixe (1).

9. Dispositif selon la revendication 7, **caractérisé en ce que** les moyens de serrage intègrent au moins un rouleau (12b) ou un entraînement par bande qui peut tourner dans le sens d'insertion et est relié avec le dispositif de mesure en longueur (35a) et/ou que le dispositif de mesure en longueur intègre une roue de mesure (35b).

10. Dispositif selon la revendication 9, **caractérisé en ce qu'**au moins un des rouleaux (12b) est relié à au moins un entraînement (36) pour l'introduction entraînée et de préférence motorisée et/ou la sortie de l'extrémité de câble (13).

11. Dispositif selon une des revendications 1 ou 7 à 10, **caractérisé en ce que** le dispositif de mesure de longueur présente des émetteurs et/ou récepteurs micro-optiques (14, 15).

12. Dispositif selon la revendication 11, **caractérisé en ce que** le dispositif de mesure de longueur englobe un balai lumineux (15b) - par exemple un capteur réflexe ou une barrière lumineuse (14a, 15b) -.

13. Dispositif selon la revendication 11, **caractérisé en ce que** le dispositif de mesure de longueur englobe une barrette de diodes (14c), par exemple un CCD qui est disposé derrière les moyens de serrage (12), parallèlement à l'extrémité de câble (13) à introduire.

14. Dispositif selon la revendication 11, **caractérisé en ce qu'**une unité d'écran vidéo-optique ou d'affichage (14d), qui est de préférence couplée avec une unité d'exploitation d'images (37) pour le calcul photo-numérique de la longueur de câble, est prévue.

15. Dispositif selon une des revendications 11 à 14, **caractérisé en ce que** le dispositif de mesure de longueur intègre, pour l'éclairage et/ou le balayage d'informations de longueurs, des câbles à fibres optiques ou des conducteurs d'ondes lumineuses (38).

16. Dispositif selon une des revendications 11 à 15, **caractérisé en ce que** le dispositif de mesure de longueur présente des analyseurs comparatifs de surface (35 c, d) qui relèvent le cas échéant à des fins de mesure les informations de longueur imprimées.

17. Dispositif selon une des revendications 11 à 16, **caractérisé en ce que** des émetteurs optiques lumineux et/ou des capteurs sont intégrés dans les dispositifs de serrage, de centrage ou de guidage.

18. Dispositif selon une des revendications précédentes 7 à 17, **caractérisé en ce que** plusieurs dispositifs de mesure de longueur fonctionnant indépendamment l'un de l'autre sont prévus, dont au moins un fonctionne sans contact.
